# FASCICULE DE BREVET EUROPEEN

(11) **EP 0 426 519 B1**
(45) Date de publication et mention de la délivrance du brevet: **20.07.1994**
(21) Numéro de dépôt: 90402812.3
(22) Date de dépôt: 09.10.1990
(51) Int. Cl.: G21C 17/10, F16K 15/03

(54) **Dispositif d'obturation d'un conduit vertical de support et de guidage d'un élément de forme allongée**
Abdichtungsvorrichtung einer vertikalen Rohrleitung, die ein längliches Element trägt und leitet
Blocking device for a vertical conduit supporting and guiding an elongate-shaped element

(30) Priorité: 02.11.1989 FR 8914374
(43) Date de publication de la demande: 08.05.1991
(73) Titulaire: FRAMATOME, 92400 Courbevoie (FR)
(72) Inventeur: Feurgard, René, F-78170 La Celle Saint Cloud (FR)
(74) Mandataire: Bouget, Lucien

(56) Documents cités:
- DE-A- 3 246 227
- FR-A- 2 524 601
- US-A- 3 769 156
- US-A- 4 070 239

## Description

L'invention concerne un dispositif d'obturation d'un conduit vertical de support et de guidage d'un élément de forme allongée tel qu'un conduit de guidage d'une sonde de mesure dans un réacteur nucléaire.

Dans l'exploitation des réacteurs nucléaires tels que les réacteurs nucléaires à eau sous pression, il est nécessaire d'effectuer des mesures dans le coeur constitué par les assemblages combustibles, pendant le fonctionnement du réacteur. Il est en particulier nécessaire d'effectuer des mesures de flux neutronique à différents endroits suivant la hauteur du coeur pour connaître la répartition de flux neutronique ou de puissance suivant la direction axiale du coeur qui correspond généralement à la direction verticale.

Les assemblages combustibles constituant le coeur comportent, à leur partie centrale, un tube d'instrumentation dans lequel on peut introduire, sur toute la hauteur du coeur, un doigt de gant étanche à l'intérieur duquel on déplace une sonde de mesure de flux neutronique fixée à un câble souple, pendant le fonctionnement du réacteur. Les doigts de gant associés à chacun des assemblages combustibles dans lesquels on réalise des mesures de flux doivent pouvoir être extraits de ces assemblages, par exemple lorsqu'on effectue le rechargement du coeur. Ces doigts de gant sont donc montés mobiles par glissement à l'intérieur de tubes de guidage joignant la partie inférieure de la cuve à un local de mesure dans lequel les extrémités des doigts de gant opposées aux extrémités introduites dans le coeur sont accessibles pour le déplacement des sondes, pour le recueil des signaux de mesure et pour le déplacement des doigts de gant à l'intérieur des tubes de guidage. Le déplacement des doigts de gant dans les tubes de guidage se fait par simple poussée ou traction, un jeu suffisant étant prévu pour limiter les efforts à exercer sur le doigt de gant, malgré la forme courbe des tubes de guidage sur une grande partie de leur parcours.

Dans un mode de réalisation connu et largement utilisé, le parcours du doigt de gant a une forme d'U depuis la partie supérieure du tube-guide de l'assemblage combustible correspondant jusqu'à son extrémité parvenant dans le local de mesure.

Le tube de guidage du doigt de gant comporte successivement une première partie verticale fixée sur le fond de cuve, dans le prolongement d'un canal de passage traversant une partie des équipements internes inférieurs du réacteur et du tube-guide de l'assemblage combustible correspondant, une seconde partie horizontale et une troisième partie verticale dont l'extrémité supérieure est fixée sur la structure du réacteur nucléaire et porte un dispositif de traversée permettant le passage étanche du doigt de gant dont la partie d'extrémité supérieure correspondant à la partie supérieure de la seconde branche du U, de direction verticale, se trouve à l'extérieur du tube de guidage. Cette partie d'extrémité supérieure du doigt de gant débouche à l'intérieur du local de mesure et présente une extrémité ouverte par laquelle une sonde de mesure fixée à l'extrémité d'un câble souple peut être introduite dans le doigt de gant.

Le dispositif de traversée étanche fixé à la partie supérieure du tube de guidage se trouve à un niveau légèrement supérieur au niveau de la cuve du réacteur, si bien que, pendant les périodes d'entretien du réacteur, la cuve et la piscine du réacteur étant remplies d'eau, cette eau ne peut parvenir jusqu'à l'extrémité du tube de guidage, dans le cas où le doigt de gant est entièrement extrait du tube de guidage. On évite ainsi des fuites dans le local recevant les parties d'extrémité des tubes de guidage.

Pendant le fonctionnement du réacteur, le tube de guidage est rempli de fluide primaire à haute température et sous pression, si bien que la pression de ce fluide, de l'ordre de 155 bars, est appliquée sur la surface extérieure du doigt de gant introduit dans le tube de guidage. Le dispositif de traversée étanche du doigt de gant permet d'éviter toute fuite d'eau primaire sous pression à la partie supérieure du tube de guidage, l'étanchéité étant assurée par des joints du dispositif de traversée en contact étanche avec la surface extérieure du doigt de gant.

Un dispositif de traversée permettant le passage étanche de doigts de gant d'un réacteur nucléaire à eau sous pression est décrit dans le brevet FR-A-2.080.077 au nom de la Société FRAMATOME.

La paroi du doigt de gant est normalement totalement étanche mais cette paroi peut être détériorée en cours d'utilisation et en particulier au moment de la mise en place ou de l'extraction du doigt de gant dans le tube de guidage.

En outre, cette paroi est exposée sur sa surface extérieure à un fluide à haute température et à haute pression en circulation à grande vitesse dans le réacteur qui peut provoquer localement certaines détériorations de la paroi des doigts de gant par un phénomène mécanique ou thermique ou encore par corrosion. Il peut en résulter des défauts d'étanchéité du doigt de gant se traduisant par une fuite du fluide primaire à l'intérieur du doigt de gant.

Du fluide primaire est ainsi susceptible de parvenir dans la partie supérieure verticale du doigt de gant située au-dessus du dispositif de traversée étanche. On dispose donc à l'extrémité supérieure ouverte de chacun des doigts de gant, une vanne d'isolement manuelle qui permet d'obturer le doigt de gant dans le cas où celui-ci n'est plus étanche.

La fermeture de cette vanne nécessite l'intervention d'un opérateur à l'intérieur du local où sont placés le dispositif de traversée étanche et la partie d'extrémité supérieure verticale du doigt de gant. Dès l'apparition de la fuite sur le doigt de gant, du liquide primaire contaminé se répand dans le local, ce qui permet de déceler une fuite sur le doigt de gant nécessitant l'intervention de l'opérateur. La présence de liquide contaminé dans le local où intervient l'opérateur rend cette intervention relativement dangereuse et peut entraîner une certaine irradiation des personnels affectés à la surveillance et à l'entretien de la centrale nucléaire.

Cette intervention est d'autant plus dangereuse que la paroi extérieure du doigt de gant détériorée reste soumise généralement à la pression du fluide primaire dans le réacteur en fonctionnement.

On connaît des dispositifs de fermeture d'un conduit de guidage d'une sonde de mesure utilisés dans un réacteur nucléaire à eau sous pression qui sont réalisés sous la forme d'un clapet à bille.

On connaît par exemple un dispositif de ce type comportant des moyens d'actionnement électromagnétiques permettant de maintenir la bille en position de fermeture, lorsque la sonde de mesure n'est pas introduite dans le conduit.

Un tel dispositif qui nécessite des moyens d'actionnement de type actif présente une sécurité de fonctionnement insuffisante, dans la mesure où les moyens d'actionnement peuvent se trouver accidentellement indisponibles.

On connaît également du document US-A-4 070 239 un dispositif constitué par un clapet à bille dont la bille vient se placer automatiquement en position de fermeture par gravité, lorsque la sonde de mesure n'est pas introduite dans le doigt de gant. Cependant, un tel dispositif à fonctionnement passif doit être placé dans une partie verticale du tube de guidage du doigt de gant située au voisinage du fond de cuve. Ce dispositif n'assure donc pas la fermeture de l'extrémité supérieure du doigt de gant au voisinage du local de mesure.

Le but de l'invention est donc de proposer un dispositif d'obturation d'un conduit vertical de support et de guidage d'un élément de forme allongé tel qu'un conduit de guidage d'une sonde de mesure dans un réacteur nucléaire, qui permette de limiter ou d'éviter des fuites d'un fluide pénétrant dans le conduit vertical et de déceler très rapidement la présence de ce fluide dans le conduit, de manière à intervenir plus rapidement et plus sûrement pour assurer la fermeture de l'extrémité du conduit vertical, aussi bien dans le cas où l'élément de forme allongée est disposé à l'intérieur de son conduit de guidage que lorsque le conduit de guidage ne renferme pas l'élément de forme allongée.

Dans ce but, le dispositif d'obturation suivant l'invention est constitué par un boîtier intercalé entre un tronçon inférieur et un tronçon supérieur du conduit comportant :
- deux moyens de raccordement étanches au boîtier du tronçon inférieur et du tronçon supérieur du conduit, respectivement,
- une chambre centrale,
- un canal de passage de l'élément allongé comportant une partie supérieure traversant le moyen de raccordement du tronçon supérieur du conduit et une partie inférieure traversant le moyen de raccordement du tronçon inférieur du conduit, débouchant dans la chambre centrale du boîtier,
- un obturateur disposé dans la chambre centrale, monté oscillant dans le boîtier par l'intermédiaire d'un axe horizontal et comportant un contrepoids et un organe de fermeture susceptible de venir obturer de manière étanche l'extrémité de la partie supérieure du canal débouchant dans la chambre, lorsque l'élément allongé n'est pas introduit dans le conduit, par basculement de l'obturateur sous l'effet du contrepoids,
- et un moyen de mesure de pression au niveau d'une ouverture traversant la paroi du boîtier et débouchant dans la chambre centrale.

Afin de bien faire comprendre l'invention, on va maintenant décrire, à titre d'exemple non limitatif, en se reportant aux figures jointes en annexe, un mode de réalisation du dispositif d'obturation suivant l'invention dans le cas d'un conduit de guidage et de positionnement d'une sonde de mesure dans la cuve d'un réacteur nucléaire à eau sous pression.

La figure 1 est une vue schématique en élévation et en coupe par un plan vertical d'une partie d'un réacteur nucléaire et d'un tube d'instrumentation de ce réacteur comportant un conduit de guidage d'une sonde de mesure en forme d'U.

La figure 2 est une vue à plus grande échelle de la partie d'extrémité supérieure d'un tube d'instrumentation tel que représenté sur la figure 1 et comportant un dispositif d'obturation suivant l'invention intercalé sur son conduit de guidage.

La figure 3 est une vue d'ensemble en élévation et en coupe partielle d'un dispositif d'obturation suivant l'invention réalisé sous la forme d'un boîtier.

La figure 4 est une vue en coupe suivant 4-4 de la figure 3 montrant l'obturateur dans sa position fermée.

La figure 5 est une vue suivant 5-5 de la figure 4.

La figure 6 est une vue en coupe analogue à la vue de la figure 4 montrant l'obturateur dans sa position ouverte.

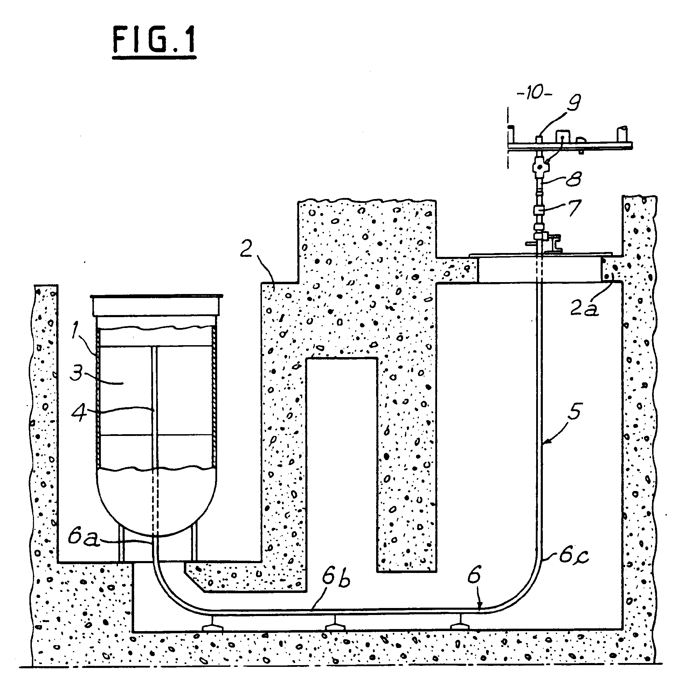

Sur la figure 1, on voit la cuve 1 d'un réacteur nucléaire à eau sous pression disposée à l'intérieur d'un puits de cuve constituant une partie de la structure en béton 2 du bâtiment du réacteur nucléaire.

La cuve 1 renferme le coeur 3 du réacteur nucléaire constitué par des assemblages combustibles juxtaposés.

On a représenté sur la figure 1, le tube-guide d'instrumentation 4 d'un assemblage du coeur 3 constituant la partie terminale de direction verticale d'un tube d'instrumentation 5 permettant d'effectuer des mesures de flux neutronique suivant la hauteur du coeur 3 du réacteur.

Le tube d'instrumentation 5 en forme d'U comporte un tube de guidage 6 traversant le fond de cuve de manière étanche et fixé sur celui-ci dans le prolongement du tube-guide 4 et d'un canal de jonction entre le fond de cuve et la partie inférieure du tube-guide 4 traversant une partie des équipements internes inférieurs du réacteur.

A la suite du tronçon vertical 6a fixé sur le fond de cuve, le tube de guidage 6 comporte un tronçon horizontal 6b puis un tronçon vertical 6c dont l'extrémité supérieure est fixée sur une partie 2a de la structure du réacteur nucléaire.

Les tronçons 6a, 6b et 6c du tube de guidage 6 sont reliés entre eux par des parties cintrées du tube de guidage.

La partie d'extrémité supérieure du tronçon 6c du tube de guidage 6 est reliée à un dispositif de traversée 7 permettant le passage étanche dans le tube de guidage 6 d'un conduit 8 destiné à assurer le guidage et le positionnement d'au moins une sonde de mesure à l'intérieur du tube-guide 4.

Le conduit 8 en forme de doigt de gant comporte une extrémité fermée destinée à venir en position de service à l'intérieur du tube-guide 4 et une extrémité ouverte située à l'opposé, à l'extrémité de la partie du conduit 8 située à l'extérieur du tube de guidage 6, au-dessus du dispositif de passage étanche 7.

Dans sa partie d'extrémité supérieure située à l'extérieur du tube de guidage 6, le conduit 8 comporte une vanne de fermeture manuel le 9 destinée à obturer de manière étanche l'extrémité du conduit de guidage dans le cas où le conduit 8 présente un défaut d'étanchéité qui peut être décelé pendant le fonctionnement du réacteur.

Le conduit de guidage 8 ou doigt de gant permet de réaliser le guidage et le positionnement d'une ou plusieurs sondes de mesure fixées sur un câble souple qui est introduit à l'intérieur du tube de guidage 8, par son extrémité supérieure ouverte.

Le tube d'instrumentation 5 et le conduit de guidage 8 constituant sa partie interne destinée à recevoir les sondes de mesure présentent la forme d'un U dont l'une des branches verticales se trouve à l'intérieur de la cuve du réacteur et dont l'autre branche verticale débouche à sa partie supérieure dans un local de mesure 10 à partir duquel on peut réaliser l'introduction et l'extraction des doigts de gant 8 dans les tubes de guidage, l'introduction et l'extraction des sondes de mesure à l'intérieur des doigts de gant et la récupération et le traitement des signaux de mesure provenant des sondes.

Le dispositif de traversée étanche 7 est à un niveau supérieur au niveau de la cuve 1 du réacteur.

Lorsqu'on effectue des opérations de rechargement du réacteur, et éventuellement des travaux d'entretien et de réparation, la cuve du réacteur est ouverte, comme représenté sur la figure 1, et remplie d'eau. Le niveau de l'eau dans les tubes de guidage 6 communiquant avec l'intérieur de la cuve se situe alors en-dessous du dispositif de traversée étanche 7 des doigts de gant 8.

Lorsque le réacteur est en fonctionnement, la cuve est fermée par un couvercle et remplie d'eau primaire à une pression de l'ordre de 155 bars.

Les tubes de guidage 6 dans chacun desquels est engagé un doigt de gant 8 se remplissent d'eau primaire sous pression jusqu'au niveau du passage de traversée étanche 7 où la fermeture de l'extrémité supérieure du tube de guidage 6 est assurée par le doigt de gant 8 coopérant avec les joints du dispositif 7.

La surface extérieure de la paroi des doigts de gant 8 est soumise à la pression du fluide primaire.

Dans le cas où l'un des doigts de gant 8 présente un défaut d'étanchéité, l'eau primaire pénètre à l'intérieur du doigt de gant et vient se répandre à l'intérieur du local 10 par l'extrémité ouverte du doigt de gant débouchant dans ce local. Il est alors nécessaire de venir fermer très rapidement la vanne manuelle 9, ce qui présente, comme indiqué plus haut, certains dangers pour l'opérateur.

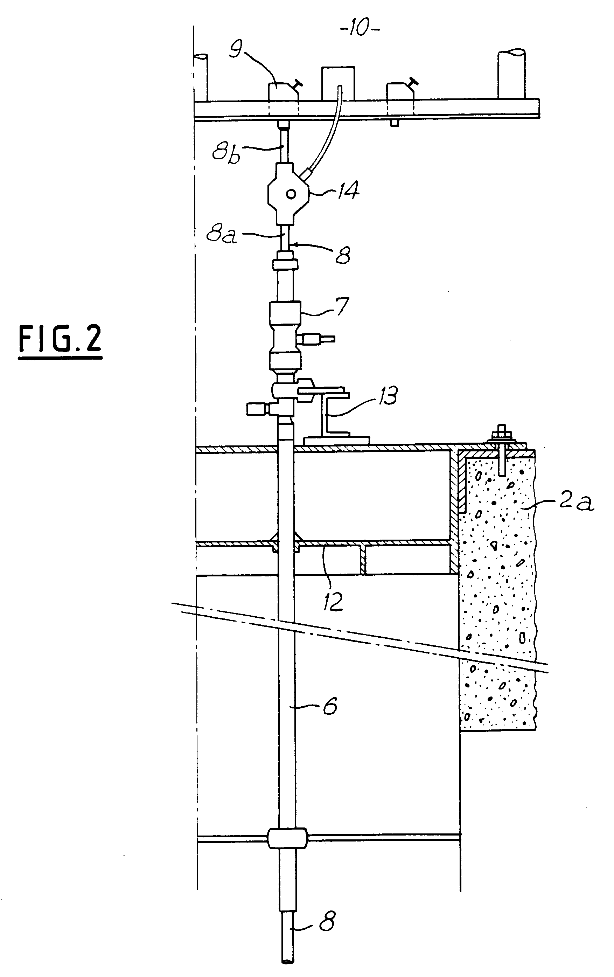

Sur la figure 2, on a représenté la partie supérieure d'un tube d'instrumentation tel que le tube 5 de la figure 1, au niveau du local de mesure 10. Les éléments correspondants sur les figures 1 et 2 portent les mêmes repères.

Le tube de guidage 6 dans lequel est engagé le doigt de gant 8 est fixé, à sa partie supérieure, sur une structure métallique 12 elle-même solidaire de la partie 2a de la structure en béton du réacteur.

Sur la surface supérieure de la structure 12 sont fixés les dispositifs de traversée étanche 7 des doigts de gant 8, par l'intermédiaire de supports 13.

La partie d'extrémité supérieure du doigt de gant 8 de direction verticale et située à l'extérieur du tube de guidage 6 et du dispositif d'étanchéité 7 porte, à son extrémité supérieure, une vanne de fermeture manuelle 9 permettant d'obturer de manière totalement étanche l'extrémité du doigt de gant 8, dans le cas où la paroi de ce doigt de gant présente un défaut d'étanchéité.

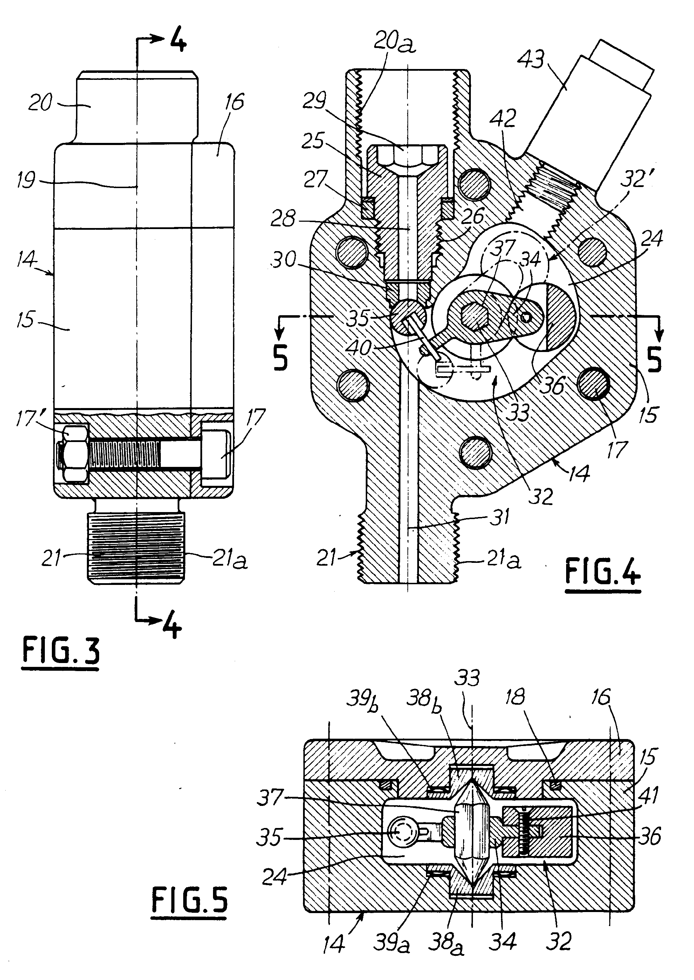

Un dispositif d'obturation 14 suivant l'invention qui sera décrit plus en détail en se référant aux figures 3 à 5 est intercalé sur la partie d'extrémité supérieure verticale du doigt de gant 8, entre un tronçon inférieur 8a de cette partie supérieure et un tronçon supérieur 8b à l'extrémité duquel est fixée la vanne de fermeture manuelle 9.

Sur les figures 3, 4 et 5, on voit que le dispositif d'obturation 14 suivant l'invention est constitué sous la forme d'un boîtier comportant une paroi de forte épaisseur constituée de deux parties complémentaires 15 et 16 assemblées entre elles par des vis 17 et des écrous de serrage 17′.

Les vis 17 traversent les deux parties 15 et 16 du boîtier sur toute leur épaisseur et assurent un serrage efficace de ces deux parties entre lesquelles est intercalé un joint d'étanchéité 18 engagé dans une gorge annulaire usinée dans la partie 15 du boîtier, à l'intérieur de la zone de la pièce 15 traversée par les vis 17.

Les têtes des vis 17 sont logées dans des embrèvements usinés dans la partie 16 constituant le couvercle du boîtier et les écrous 17′ sont bloqués en rotation dans des embrèvements usinés dans la seconde pièce 15 constituant le corps du boîtier sur lequel est fixé le couvercle 16.

Comme il est visible sur les figures 3 et 4, le corps 15 du boîtier comporte, suivant son axe 19, deux ajutages de raccordement 20 et 21.

L'ajutage 20 comporte un alésage interne 20a taraudé sur une partie de sa hauteur et constituant un logement de forme cylindrique.

L'ajutage 21 comporte un filetage externe 21a.

Les parties 20a et 21a des ajutages de raccordement 20 et 21 sont destinées à recevoir des pièces de jonction solidaires des extrémités correspondantes des tronçons 8a et 8b du doigt de gant qui sont fixées par vissage sur le boîtier 14. L'étanchéité de la jonction est assurée par des joints ou par un cordon de soudure.

Le corps 15 du boîtier comporte une cavité 24 qui est fermée de manière étanche par le couvercle 16, lors de l'assemblage du boîtier grâce aux, vis 17 et au joint d'étanchéité 18.

La partie lisse de l'alésage de l'ajutage de raccordement 20 constitue le logement de la tête d'une vis 25 fixée dans un alésage taraudé 26 usiné dans le corps 15 du boîtier 14 dans le prolongement de l'alésage 20a. Un joint d'étanchéité 27 est intercalé entre un épaulement de la tête de vis 25 et l'épaulement terminal de l'alésage de l'ajutage de raccordement 20.

Le corps 15 du boîtier 14 est percé dans le prolongement de l'alésage de l'ajutage 20 et du trou taraudé 26, de manière à constituer une ouverture débouchant dans la chambre 24 à l'intérieur de laquelle est disposé un siège de soupape 30 en graphite expansé. La vis 25 et le siège 30 sont percés axialement et sur toute leur longueur pour constituer un canal 28 parfaitement câlibré.

Le canal 28 débouche à son extrémité supérieure dans une ouverture prismatique 29 permettant d'effectuer le serrage de la vis 25 engagée dans l'alésage de l'ajutage 20, depuis la partie d'entrée de cet alésage. Le serrage est effectué de manière à maintenir le siège dans son logement, la limitation du serrage étant obtenue par écrasement du joint 27 sur lequel l'épaulement de la tête de vis vient s'appliquer par l'intermédiaire d'une rondelle.

Une rondelle élastique est également intercalée entre l'extrémité de la vis 25 et la surface supérieure du siège 30 sur laquelle s'applique la pression exercée par la vis.

L'ajutage 21 est percé axialement pour constituer un canal 31 parfaitement câlibré dont le diamètre est égal au diamètre du canal 28. Le canal 31 débouche dans la cavité 24 dans le prolongement axial du canal 28 traversant le siège 30 et la vis de maintien 25.

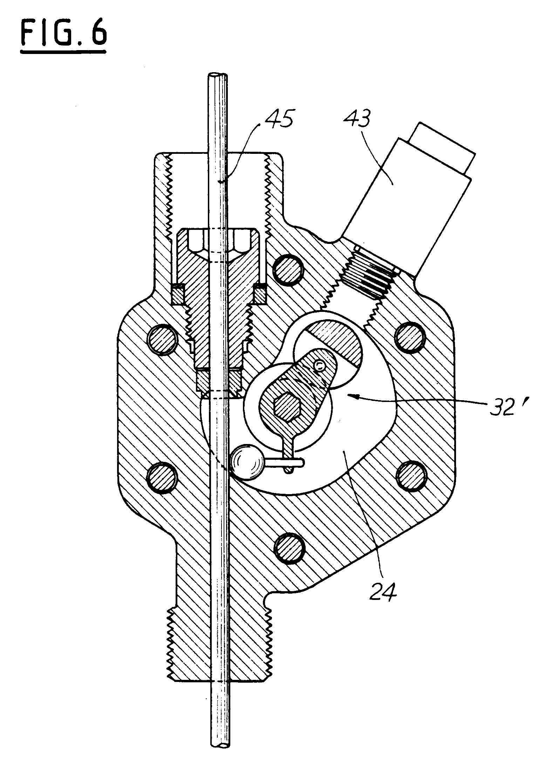

Comme il est visible sur les figures 4 et 5, le boîtier 14 comporte un obturateur 32 monté oscillant autour d'un axe horizontal 33, à l'intérieur de la cavité 24, entre le corps 15 et le couvercle 16 du boîtier.

L'obturateur mobile 32 comporte un balancier 34 qui est constitué par une pièce de fonderie obtenue par moulage de précision, un organe de fermeture sphérique 35 et un contrepoids 36 en matériau fritté constitué par du carbure de tungstène lié par du nickel.

Le balancier 34 est traversé à sa partie centrale par une ouverture ayant une section de forme hexagonale dans laquelle est engagé un arbre 37 ayant une partie centrale de forme prismatique à section hexagonale et deux parties d'extrémité tronconiques lisses constituant des pivots.

Les pivots de l'arbre 37 sont engagés à l'intérieur de cavités tronconiques de deux paliers 38a et 38b en matériau dur disposés respectivement dans une cavité prévue dans le corps 15 du boîtier et dans une cavité du couvercle 16.

L'arbre 37 est maintenu par serrage élastique entre les paliers 38a et 38b, grâce à des rondelles élastiques 39a et 39b intercalées entre un épaulement du palier correspondant et un épaulement de la cavité dans laquelle est engagé le palier.

Lors du serrage du couvercle 16 sur le corps 15 du boîtier, par l'intermédiaire des vis 17, l'axe 37 se trouve serré de manière élastique entre les paliers 38a et 38b. Le balancier 34 qui est bloqué sur l'axe prismatique 37 et l'ensemble de l'obturateur 32 solidaire du balancier 34 sont donc ainsi montés mobiles en rotation à l'intérieur de la cavité 24 du boîtier 14.

L'axe prismatique 37 et les paliers 38a et 38b sont constitués par des pièces en matériau dur qui peuvent être obtenues par métallurgie des poudres.

L'obturateur 35 est constitué par une bille en matériau dur percée par électro-érosion de manière à ménager une cavité dans laquelle est introduit un axe de faible diamètre ou aiguille 40 brasé à son autre extrémité sur une partie du balancier 34 située à une certaine distance de l'axe de rotation 33 de ce balancier.

La cavité usinée dans la bille 35 permet un montage flottant de la bille sur l'aiguille 40, de manière que lorsque l'obturateur est dans sa position de fermeture, comme représenté sur la figure 4, la bille 35 vienne s'engager dans une cavité hémisphérique usinée dans le siège 30 à l'extrémité du canal 28.

Le montage flottant de la bille permet d'améliorer le contact de sa surface externe avec la portée du siège de forme hémisphérique pour assurer une fermeture étanche du canal 28 traversant le siège 30 et la vis 25.

Le contrepoids comporte un lamage intérieur dans lequel est engagée une partie d'extrémité du balancier 34 située à l'opposé de la partie sur laquelle est fixée l'aiguille 40, par rapport à l'axe de rotation 33 de l'obturateur. Le contrepoids 36 est fixé par une vis 41 sur le balancier 34.

La position du contrepoids 36 permet de rappeler la bille 35 en position de fermeture à l'intérieur de la cavité hémisphérique du siège 30, comme représenté sur la figure 4.

Le corps 15 du boîtier 14 constituant une paroi entourant la cavité 24 est traversé sur toute son épaisseur par un trou taraudé 42 dans lequel est fixée par vissage l'extrémité de raccordement d'un manomètre 43 permettant de surveiller en permanence la pression à l'intérieur de la cavité 24. Le manomètre 43 est constitué par un capteur de pression qui actionne un organe électrique tel qu'un contact tout ou rien dont le signal est envoyé par un câble sur un dispositif d'alarme situé dans le local de mesure 10.

Dans le cas où la pression à l'intérieur de la chambre 24 dépasse une certaine valeur prédéterminée, un signal d'alarme est émis, de manière à alerter l'opérateur chargé de la surveillance du local de mesure 10.

L'obturateur 14, comme il est visible sur la figure 2, est intercalé entre deux tronçons 8a et 8b d'un doigt de gant du réacteur nucléaire à eau sous pression, destiné à assurer le support et le guidage d'une sonde de mesure fixée à l'extrémité d'un câble souple.

Le diamètre de la sonde de mesure et du câble souple sont très légèrement inférieurs au diamètre intérieur des canaux 28 et 31 traversant les ajutages de raccordement du boîtier 14.

La sonde fixée à l'extrémité de son câble de mesure peut être introduite dans le doigt de gant, de manière qu'elle pénètre dans le tronçon supérieur 8b du doigt de gant, puis dans l'ajutage de raccordement 20 du boîtier 14 et dans le canal 28. A la sortie du canal 28, la sonde exerce une poussée vers le bas sur la bille 35 de fermeture étanche du siège 30, ce qui fait basculer l'obturateur 32 dans sa position 32′ représentée en traits interrompus sur la figure 4 et en traits pleins sur la figure 6. La sonde de mesure et son câble de raccordement 45 sont introduits dans le canal 31 traversant l'ajutage 21, puis dans le tronçon inférieur 8a du conduit de mesure engagé à l'intérieur du dispositif de passage étanche 7.

La sonde et son câble de raccordement sont guidés par le doigt de gant jusqu'au moment où la sonde est parvenue, dans sa position de service, à l'intérieur du coeur 3 du réacteur.

Comme il est visible sur la figure 6, lorsque la sonde est en place dans le conduit de mesure, le câble 45 est engagé avec un très faible jeu à l'intérieur des canaux 31 et 28.

Dans le cas où le doigt de gant dans lequel est engagée la sonde de mesure présente un défaut d'étanchéité, l'eau sous pression du réacteur nucléaire pénétrant dans le doigt de gant 8 subit une très forte perte de charge au niveau de l'espace annulaire de très faible épaisseur subsistant entre la surface extérieure du câble 45 et la surface du canal 31. De l'eau à une pression très inférieure à la pression primaire commence à remplir la cavité 24 du boîtier 14. Lorsque la pression dans la cavité 24 dépasse le seuil de surveillance prédéterminé, le manomètre 43 envoie un signal dans le local de mesure qui alerte l'opérateur de la présence d'une fuite à travers la paroi du doigt de gant 8. L'opérateur peut alors fermer la vanne 9 assurant l'étanchéité du doigt de gant, avant que du liquide contaminé ne se répande dans le local 10.

Lorsque la sonde de mesure et son câble 45 ne sont pas en position à l'intérieur du doigt de gant, l'obturateur est dans sa position 32 représentée en traits pleins sur la figure 4. La bille 35 est appliquée contre le siège 30, par le contrepoids 36 de l'obturateur 32.

Dans le cas où le doigt de gant présente une fuite, de l'eau sous pression du réacteur nucléaire pénètre dans ce doigt de gant et vient remplir la cavité 24. L'eau sous pression exerce une force verticale dirigée vers le haut sur la bille 35 qui est ainsi appliquée contre la cavité hémisphérique du siège 30 avec une pression d'autant plus forte que la pression est plus élevée dans la cavité 24. L'obturateur 14 assure donc une fermeture étanche de la partie supérieure du doigt de gant, ce qui évite une fuite d'eau sous pression dans le local 10.

Un signal d'alarme est envoyé dans le local de mesure par le capteur de pression 43, dès que la pression dans la chambre 24 dépasse le seuil de surveillance prédéterminé.

L'opérateur est ainsi alerté et réalise la fermeture de la vanne 9 du doigt de gant, afin d'augmenter la sécurité de la fermeture étanche de ce doigt de gant présentant une fuite.

Dans tous les cas, s'il se produit une fuite à travers la paroi d'un doigt de gant, l'opérateur peut réaliser la fermeture étanche de ce doigt de gant avant que du liquide contaminé ne se répande dans le local de mesure.

Dans le cas où la sonde de mesure n'est pas introduite dans le doigt de gant, l'obturateur selon l'invention assure une fermeture étanche du doigt de gant de manière automatique et passive, lors de l'apparition d'une fuite à travers la paroi du doigt de gant.

L'invention ne se limite pas au mode de réalisation qui a été décrit.

La paroi du boîtier 14 constituant le dispositif d'obturation peut être réalisée d'une manière différente de celle qui a été décrite, à partir de pièces différentes d'un corps et d'un couvercle de forme adaptée obtenues par moulage de précision.

Le mode de réalisation du boîtier en deux parties rapportées l'une sur l'autre et fixées par des vis avec interposition d'un joint d'étanchéité permet de faciliter le montage du dispositif d'obturation et en particulier de l'obturateur mobile situé dans sa cavité centrale.

Il est bien évident également que les canaux de passage de la sonde de mesure et de son câble de raccordement peuvent être réalisés d'une manière différente de celle qui a été décrite.

De même, le siège sur lequel vient s'appliquer le dispositif de fermeture de l'obturateur mobile peut être réalisé et fixé à l'intérieur du boîtier d'une manière différente de celle qui a été décrite.

De même, l'obturateur mobile peut présenter une forme différente de celle qui a été décrite. Le contrepoids peut être réalisé en une seule pièce avec le corps ou balancier de l'obturateur et l'axe de rotation de cet obturateur peut être réalisé sous une forme différente de celle qui a été décrite.

L'organe de fermeture de l'obturateur peut être différent d'une bille et peut être fixé sur le corps ou balancier de l'obturateur, de toute manière appropriée.

Enfin, le dispositif d'obturation suivant l'invention peut être utilisé non seulement dans le cas d'un doigt de gant introduit dans un réacteur nucléaire à eau sous pression et recevant une sonde de mesure fixée à l'extrémité d'un câble souple, mais également dans le cas de tout conduit de mesure d'un réacteur nucléaire ou de toute autre installation industrielle mettant en oeuvre un fluide sous pression et nécessitant des mesures à distance.

De manière encore plus générale, le dispositif d'obturation suivant l'invention peut être utilisé dans le cas d'un conduit vertical quelconque servant au support et guidage d'un élément de forme allongée, un fluide sous pression étant susceptible de pénétrer dans ce conduit de manière accidentelle.

## Revendications

1. Dispositif d'obturation d'un conduit vertical (8) de support et de guidage d'un élément de forme allongée (45) tel qu'un conduit de guidage d'une sonde de mesure dans un réacteur nucléaire, caractérisé par le fait qu'il est constitué par un boîtier (14) intercalé entre un tronçon inférieur (8a) et un tronçon supérieur (8b) du conduit (8) comportant :
- deux moyens de raccordement étanche (20, 21) au boîtier (14) du tronçon inférieur (8a) et du tronçon supérieur (8b) du conduit (8) respectivement,
- une chambre centrale (24) délimitée par la paroi du boîtier (14),
- un canal de passage (28, 31) de l'élément allongé (45) comportant une partie supérieure (28) traversant le moyen de raccordement (20) du tronçon supérieur (8b) du conduit (8) et une partie inférieure (31) traversant le moyen de raccordement (21) du tronçon inférieur (8a) du conduit (8), débouchant dans la chambre centrale (24) du boîtier (14),
- un obturateur (32) disposé dans la chambre centrale (24) monté oscillant dans le boîtier (14) autour d'un axe horizontal (33) et comportant un contrepoids (36) et un organe de fermeture (35) susceptible de venir obturer de manière étanche l'extrémité (30) de la partie supérieure (28) du canal débouchant dans la chambre (24), lorsque l'élément allongé (45) n'est pas introduit dans le conduit (28, 31), par basculement de l'obturateur (32), sous l'effet du contrepoids (36),
- et un moyen de mesure de pression (43) au niveau d'une ouverture (42) traversant la paroi du boîtier (14) et débouchant dans la chambre centrale (24).

2. Dispositif d'obturation suivant la revendication 1, caractérisé par le fait que la paroi du boîtier (14) comporte un corps (15) et un couvercle (16) rapporté de manière étanche grâce à un joint (18) sur le corps (15) et serré par une pluralité de vis (17).

3. Dispositif d'obturation suivant la revendication 2, caractérisé par le fait que le corps (15) et le couvercle (16) sont constitués par des pièces fabriquées par moulage de précision.

4. Dispositif d'obturation suivant l'une quelconque des revendications 1 à 3, caractérisé par le fait que le moyen de raccordement supérieur (20) du boîtier (14) est constitué par un ajutage comportant un alésage à axe vertical débouchant dans la cavité centrale (24) du boîtier (14) dans lequel est fixé un siège (30) comportant une portée d'appui pour l'organe de fermeture (35) de l'obturateur oscillant (32).

5. Dispositif d'obturation suivant la revendication 4, caractérisé par le fait que le siège (30) est fixé dans l'alésage de l'ajutage (20), par une vis (25) engagée et fixée de manière étanche dans l'alésage de l'ajutage (20) et venant en appui sur le siège (30), le siège (30) et la vis (25) étant percés axialement pour constituer le canal (28) de passage de l'élément allongé (45).

6. Dispositif d'obturation suivant l'une quelconque des revendications 4 et 5, caractérisé par le fait que le siège (30) est en graphite.

7. Dispositif d'obturation suivant l'une quelconque des revendications 1 à 6, caractérisé par le fait que l'obturateur oscillant (32) comporte un balancier (34) solidaire d'un axe (37) monté rotatif à l'intérieur du boîtier (14), ayant une première partie d'extrémité sur laquelle est fixé l'organe de fermeture (35) et une seconde partie d'extrémité située à l'opposé de la première partie d'extrémité par rapport à l'axe de rotation de l'obturateur (32) portant le contrepoids (36).

8. Dispositif d'obturation suivant la revendication 7, caractérisé par le fait que l'organe de fermeture (35) est constitué par une bille montée flottante à l'extrémité d'un axe (40) solidaire de la première partie d'extrémité du balancier (34).

9. Dispositif d'obturation suivant l'une quelconque des revendications 7 et 8, caractérisé par le fait que l'axe (37) solidaire du balancier (34) comporte des pivots d'extrémité de forme conique engagés dans des paliers de forme correspondante disposés dans des cavités ménagées dans la surface intérieure de la paroi du boîtier (14).

10. Dispositif d'obturation suivant la revendication 9, caractérisé par le fait que des éléments élastiques de rappel (39a, 39b) sont intercalés entre les paliers (38a, 38b) et des parties correspondantes des cavités ménagées dans la paroi du boîtier (14).

11. Dispositif d'obturation suivant l'une quelconque des revendications 9 et 10, caractérisé par le fait que les cavités ménagées dans la paroi du boîtier (14) recevant les paliers (38a, 38b) sont usinés dans deux pièces (15, 16) qui sont rapportées l'une sur l'autre pour constituer le boîtier (14).

12. Dispositif d'oburation suivant l'une quelconque des revendications 1 à 11, dans le cas d'un conduit de guidage et de positionnement d'une sonde de mesure, dans la cuve d'un réacteur nucléaire, le conduit en forme de doigt de gant fermé à l'une de ses extrémités par laquelle il est introduit dans la cuve et le coeur du réacteur à l'intérieur de moyens de guidage comportant une partie d'extrémité opposée à son extrémité fermée, ouverte et ressortant à l'extérieur d'un tube de guidage vertical (6), grâce à un dispositif de passage étanche (7) situé à un niveau supérieur au niveau supérieur de la cuve (1) du réacteur, caractérisé par le fait que le boîtier (14) est intercalé entre un tronçon inférieur (8a) et un tronçon supérieur (8b) du doigt de gant (8), dans sa partie d'extrémité verticale au-dessus du dispositif de passage étanche (7).

13. Dispositif d'obturation suivant la revendication 12, caractérisé par le fait que le dispositif de mesure de pression est relié à un moyen d'alarme situé dans un local de mesure (10) recevant la partie supérieure (8b) du doigt de gant (8).

14. Dispositif d'obturation suivant la revendication 13, caractérisé par le fait que la partie d'extrémité supérieure (8b) du doigt de gant est reliée à une vanne manuelle de fermeture étanche (9).

## Patentansprüche

1. Vorrichtung zum Absperren einer vertikalen Leitung (8) zum Tragen und Führen eines Elements (45) länglicher Form wie einer Leitung zum Führen einer Meßsonde in einem Kernreaktor, dadurch gekennzeichnet, daß sie aus einem Gehäuse (14) besteht, das zwischen einen unteren Abschnitt (8a) und einen oberen Abschnitt (8b) der Leitung (8) eingesetzt ist und umfaßt:
- zwei Einrichtungen (20, 21) zum dichten Anschluß des unteren Abschnitts (8a) bzw. des oberen Abschnitts (8b) der Leitung (8) an das Gehäuse (14),
- eine durch die Wand des Gehäuses (14) abgegrenzte zentrale Kammer (24),
- einen Kanal (28, 31) zum Durchgang des länglichen Elements (45), der einen die Einrichtung (20) zum Anschluß des oberen Abschnitts (8b) der Leitung (8) durchquerenden oberen Teil (28) und einen die Einrichtung (21) zum Anschluß des unteren Abschnitts (8a) der Leitung (8) durchquerenden unteren Teil (31) umfaßt, die in die zentrale Kammer (24) des Gehäuses (14) münden,
- ein in der zentralen Kammer (24) angeordnetes Absperrelement (32), das im Gehäuse (14) um eine horizontale Achse (33) schwingend montiert ist und ein Gegengewicht (36) und ein Verschlußorgan (35) besitzt, das durch Kippen des Absperrelements (32) unter der Wirkung des Gegengewichts (36) das Ende (30) des oberen Teils (28) des in die Kammer (24) mündenden Kanals dicht absperren kann, wenn das längliche Element (45) nicht in die Leitung eingeführt ist,
- und eine Druckmeßeinrichtung (43) in Höhe einer die Wand des Gehäuses (14) durchquerenden und in die zentrale Kammer (24) mündenden Öffnung.

2. Absperrvorrichtung nach Anspruch 1, dadurch gekennzeichnet, daß die Wand des Gehäuses (14) einen Körper (15) und einen Deckel (16) umfaßt, der mit Hilfe einer Dichtung (18) an dem Körper (15) dicht angebracht und durch mehrere Schrauben (17) angepreßt ist.

3. Absperrvorrichtung nach Anspruch 2, dadurch gekennzeichnet, daß der Körper (15) und der Deckel (16) aus Teilen bestehen, die durch Präzisionsguß hergestellt sind.

4. Absperrvorrichtung nach einem der Ansprüche 1 bis 3, dadurch gekennzeichnet, daß die obere Anschlußeinrichtung (20) des Gehäuses (14) aus einem Stutzen besteht, der eine in die zentrale Kammer (24) des Gehäuses (14) mündende Bohrung mit vertikaler Achse aufweist, in der ein Sitz (30) befestigt ist, der eine Auflagefläche für das Verschlußorgan (35) des schwingenden Absperrelements (32) besitzt.

5. Absperrvorrichtung nach Anspruch 4, dadurch gekennzeichnet, daß der Sitz (30) in der Bohrung des Stutzen (20) durch eine Schraube (25) befestigt ist, die in die Bohrung des Stutzen (20) eingesetzt und in dieser dicht befestigt ist und auf dem Sitz (30) zum Aufliegen kommt, wobei der Sitz (30) und die Schraube (25) axial durchbohrt sind, um den Kanal (28) zum Durchgang des länglichen Elements (45) zu bilden.

6. Absperrvorrichtung nach einem der Ansprüche 4 und 5, dadurch gekennzeichnet, daß der Sitz (30) aus Graphit besteht.

7. Absperrvorrichtung nach einem der Ansprüche 1 bis 6, dadurch gekennzeichnet, daß das schwingende Absperrelement (32) einen Schwinghebel (34) umfaßt, der mit einer Achse (37) fest verbunden ist, die im Inneren des Gehäuses (14) drehbar montiert ist und einen ersten Endteil, an dem das Verschlußorgan (35) befestigt ist, und einen zweiten Endteil besitzt, der bezüglich der Drehachse des das Gegengewicht (36) tragenden Absperrelements (32) auf der dem ersten Endteil entgegengesetzten Seite angeordnet ist.

8. Absperrvorrichtung nach Anspruch 7, dadurch gekennzeichnet, daß das Verschlußorgan (35) aus einer Kugel besteht, die frei beweglich am Ende einer Achse (40) montiert ist, die mit dem ersten Endteil des Schwinghebels (34) fest verbunden ist.

9. Absperrvorrichtung nach einem der Ansprüche 7 und 8, dadurch gekennzeichnet, daß die mit dem Schwinghebel (34) fest verbundene Achse (37) konische Endlagerzapfen besitzt, die in Lagern entsprechender Form sitzen, die in in der Innenfläche der Wand des Gehäuses (14) vorgesehenen Aussparungen angeordnet sind.

10. Absperrvorrichtung nach Anspruch 9, dadurch gekennzeichnet, daß elastische Rückholelemente (39a, 39b) zwischen die Lager (38a, 38b) und entsprechende Teile der in der Wand des Gehäuses (14) vorgesehenen Aussparungen eingesetzt sind.

11. Absperrvorrichtung nach einem der Ansprüche 9 und 10, dadurch gekennzeichnet, daß die in der Wand des Gehäuses (14) vorgesehenen Aussparungen zur Aufnahme der Lager (38a, 38b) in zwei Teilen (15, 16) ausgespart sind, die aneinander zur Bildung des Gehäuses (14) befestigt sind.

12. Absperrvorrichtung nach einem der Ansprüche 1 bis 11 im Fall einer Leitung zur Führung und Positionierung einer Meßsonde im Becken eines Kernreaktors, wobei die handschuhfingerförmige Leitung, die an einem ihrer Enden, mit dem sie in das Becken und den Kern des Reaktors im Inneren von Führungseinrichtungen eingeführt ist, geschlossen ist, einen ihrem geschlossenen Ende entgegengesetzten offenen Endteil besitzt, der aus dem vertikalen Führungsrohr (6) über eine dichte Durchgangsvorrichtung (7) heraustritt, die in einer Höhe angeordnet ist, die sich über der oberen Höhe des Bekkens (1) des Reaktors befindet, dadurch gekennzeichnet, daß das Gehäuse (14) zwischen einen unteren Abschnitt (8a) und einen oberen Abschnitt (8b) des Handschuhfingers (8) in seinem vertikalen Endteil oberhalb der dichten Durchgangsvorrichtung (7) eingesetzt ist.

13. Absperrvorrichtung nach Anspruch 12, dadurch gekennzeichnet, daß die Druckmeßvorrichtung mit einer Warneinrichtung verbunden ist, die in einem den oberen Teil (8b) des Handschuhfingers (8) aufnehmenden Meßraum (10) angeordnet ist.

14. Absperrvorrichtung nach Anspruch 13, dadurch gekennzeichnet, daß der obere Endteil (8b) des Handschuhfingers mit einem manuellen Ventil (9) zum dichten Verschließen verbunden ist.

## Claims

1. Obturating device for a vertical conduit (8) for supporting and guiding an elongate-shaped element (45) such as a conduit for guiding a measurement probe in a nuclear reactor, characterized in that it is constituted by a housing (14) interposed between a lower section (8a) and an upper section (8b) of the conduit (8), including:
- two means (20, 21) for the sealed coupling, to the housing (14), of the lower section (8a) and of the upper section (8b) of the conduit (8) respectively,
- a central chamber (24) delimited by the wall of the housing (14),
- a channel (28, 31) for passage of the elongate element (45), including an upper portion (28) passing through the means (20) for coupling the upper section (8b) of the conduit (8) and a lower portion (31) passing through the means (21) for coupling the lower section (8a) of the conduit (8), emerging into the central chamber (24) of the housing (14),
- an obturator (32) located in the central chamber (24) and mounted so as to swing in the housing (14) about a horizontal axis (33) and including a counterweight (36) and a closure member (35) capable of obturating in a sealed manner the end (30) of the upper portion (28) of the channel emerging into the chamber (24) when the elongate element (45) is not interposed into the conduit (28, 31), by the rocking of the obturator (32) under the effect of the counterweight (36),
- and a means (43) for measuring pressure at an opening (42) passing through the wall of the housing (14) and emerging into the central chamber (24).

2. Obturating device according to Claim 1, characterized in that the wall of the housing (14) includes a body (15) and a cover (16) assembled in a sealed manner, by virtue of a seal (18), to the body (15) and clamped by a plurality of screws (17).

3. Obturating device according to Claim 2, characterized in that the body (15) and the cover (16) are constituted by components manufactured by precision moulding.

4. Obturating device according to any one of Claims 1 to 3, characterized in that the upper coupling means (20) of the housing (14) is constituted by a nozzle including a bore having a vertical axis, emerging into the central cavity (24) of the housing (14) in which is fixed a seat (30) including a bearing surface for the closure member (35) of the swinging obturator (32).

5. Obturating device according to Claim 4, characterized in that the seat (30) is fixed in the bore of the nozzle (20) by a screw (25) engaged into and fixed in a sealed manner in the bore of the nozzle (20) and coming to bear on the seat (30), the seat (30) and the screw (25) being pierced axially in order to form the channel (28) for passage of the elongate element (45).

6. Obturating device according to either of Claims 4 and 5, characterized in that the seat (30) is made of graphite.

7. Obturating device according to any one of Claims 1 to 6, characterized in that the swinging obturator (32) includes a rocking arm (34) solidly fastened to a pin (37) mounted so as to rotate inside the housing (14), having a first end portion on which the closure member (35) is fixed and a second end portion situated opposite the first end portion with respect to the axis of rotation of the obturator (32) carrying the counterweight (36).

8. Obturating device according to Claim 7, characterized in that the closure member (35) is constituted by a ball mounted so as to float at the end of a pin (40) solidly fastened to the first end portion of the rocking arm (34).

9. Obturating device according to either of Claims 7 and 8, characterized in that the pin (37) solidly fastened to the rocking arm (34) includes cone-shaped end pivots engaged in correspondingly shaped bearings located in cavities made in the internal surface of the wall of the housing (14).

10. Obturating device according to Claim 9, characterized in that elastic return elements (39a, 39b) are interposed between the bearings (38a, 38b) and corresponding portions of the cavities made in the wall of the housing (14).

11. Obturating device according to either of Claims 9 and 10, characterized in that the cavities made in the wall of the housing (14) receiving the bearings (38a, 38b) are machined in two pieces (15, 16) which are assembled, one on the other, in order to form the housing (14).

12. Obturating device according to any one of Claims 1 to 11, in the case of a conduit for guiding and positioning a measurement probe, in the vessel of a nuclear reactor, the thimble-shaped conduit closed at one of its ends via which it is inserted into the vessel and the core of the reactor inside guide means including an end portion, opposite its closed end, open and emerging on the outside of a vertical guide tube (6), by virtue of a sealed passage device (7) located at a level above the upper level of the vessel (1) of the reactor, characterized in that the housing (14) is interposed between a lower section (8a) and an upper section (8b) of the thimble (8), in its vertical end portion above the sealed passage device (7).

13. Obturating device according to Claim 12, characterized in that the pressure-measuring device is connected to an alarm means located in a measurement room (10) receiving the upper portion (8b) of the thimble (8).

14. Obturating device according to Claim 13, characterized in that the upper end portion (8b) of the thimble is connected to a manual sealed closure valve (9).
